# EUROPÄISCHE PATENTSCHRIFT

(11) **EP 0 300 128 B1**
(45) Veröffentlichungstag und Bekanntmachung des Hinweises auf die Patenterteilung: **24.02.1993**
(21) Anmeldenummer: 88103529.9
(22) Anmeldetag: 07.03.1988
(51) Int. Cl.: B65G 13/11, B65G 39/12, B64D 9/00

(54) **Rollenförderbahn**
Roller conveyor track
Voie à galets transporteurs

(30) Priorität: 21.07.1987 DE 3724125
(43) Veröffentlichungstag der Anmeldung: 25.01.1989
(73) Patentinhaber: Bavaria Avionik Technologie GmbH, D-80973 München (DE)
(72) Erfinder: Huber, Thomas, D-8127 Iffeldorf (DE)
(74) Vertreter: Strasser, Wolfgang, Dipl.-Phys

(56) Entgegenhaltungen:
- EP-A- 0 214 669
- AT-B- 331 183
- DE-A- 3 210 204
- FR-A- 2 573 372
- FR-E- 91 722

## Beschreibung

Die Erfindung betrifft eine Rollenförderbahn mit einer Vielzahl von in Förderrichtung aufeinanderfolgend im Abstand zueinander und mit ihren Drehachsen quer zur Förderrichtung angeordneten freilaufenden und/oder elektromotorisch angetriebenen Rollen, wobei zumindest die freilaufenden Rollen dadurch in vertikalen, sich im Abstand parallel zueinander in Förderrichtung erstreckenden Seitenwänden wenigstens eines oben offenen Kanals einer tragenden Struktur drehbar und lösbar gehaltert sind, daß sie mit an ihren beiden Stirnflächen axial wegragenden Achsstummeln in passenden horizontalen Bohrungen von Halterungen aus elastisch verformbarem Material gelagert und diese Halterungen von oben her in Halterungsausschnitte eingesetzt sind, die ausgehend vom oberen Bereich der Seitenwände des wenigstens einen Kanals in diesen Seitenwänden ausgebildet sind.

Derartige Rollenförderbahnen werden insbesondere in Frachtladesystemen im Luftfrachtverkehr zur Förderung von Frachtcontainern oder anderen Gegenständen im Inneren des Laderaums von Flugzeugen eingesetzt.

Der AT-B-331 183 ist ein Bauelementesatz entnehmbar, mit dem eine Rollenförderbahn der eingangs genannten Art aufgebaut werden kann. Dabei ergibt sich eine tragende Struktur, die aus mehreren parallel zueinander in Förderrichtung am Boden des Frachtraums verankerten, nach oben offenen, U-förmigen Metallprofilen besteht. In den Seitenwänden dieser Metallprofile sind jeweils paarig gegenüberliegend Halterungsausschnitte vorgesehen, die sich ausgehend von der freien Oberkante der Seitenwände nach unten erstrecken. In diese Halterungsausschnitte können von oben her Halterungen aus elastisch verformbarem Material so eingesetzt werden, daß sich in den Halterungen vorgesehene Bohrungen miteinander fluchtend horizontal und quer zur Förderrichtung gegenüberliegen. In diesen Bohrungen sind die Achsstummel der Rollen gelagert, die auf diese Weise so positioniert sind, daß ihre obersten Mantellinien über die Oberkanten der Metallprofile nach oben vorstehen. Dabei sind die Halterungen in die Ausschnitte aber nur lose eingesetzt, so daß die Gefahr besteht, daß sie durch entsprechende auf die Rollen einwirkende Kräfte aus den Profilen herausgedrückt werden.

Ein anderes Beispiel für die Befestigung und Lagerung von Förderrollen an U-Profilen ist aus der DE-A-32 10 204 bekannt, bei der die Seitenwände der Metallprofile einander jeweils paarig gegenüberliegende Bohrungen aufweisen, die zur unmittelbaren Aufnahme der Achsstummel dienen, dabei zur freien Profiloberkante aber nicht offen sind. Dies bietet gegenüber der AT-B-331 183 den Vorteil einer wesentlich zuverlässigeren Halterung der Rollen. Da aber die beiden Seitenwände der Profile im Abstand zueinander festliegen, ist gemäß dieser Patentschrift vorgesehen, die an den beiden axialen Enden der Rolle wegragenden Achsstummel axial in die Rolle einschiebbar zu gestalten, damit die Rolle uberhaupt in das U-Profil eingesetzt und die beiden Achsstummel in dessen Löchern befestigt werden können. Zur Befestigung ist es dabei vorgesehen, daß nach dem radialen Eindrücken der Achsstummel die Rolle zunächst zwischen die beiden Seitenwände eingesetzt wird, wobei dann von der Außenseite der Seitenwand her durch die Bohrung ein Schraubbolzen eingesetzt und in ein axiales Gewinde des Achsstummels eingeschraubt wird, so daß dieser in die Öffnung in der Seitenwand hineingezogen und dort festgelegt wird.

Eine derartige Konstruktion besitzt viele mechanisch bewegliche Teile, die zudem recht kompliziert gestaltet sind, so daß sich insgesamt neben hohen Herstellungskosten auch ein recht hohes Gewicht ergibt, das gerade beim Einsatz in Luftfrachtsystemen sehr unerwünscht ist. Darüber hinaus ist es auch notwendig, die äußeren Seitenwände der U-Profile frei zugänglich zu halten, damit das Einsetzen bzw. Auswechseln der Rollen durch Einschrauben bzw. Lösen der Schraubbolzen von außen her möglich ist.

Gemäß beiden Druckschriften ergibt sich somit ein Aufbau der Rollenförderbahn, bei dem die einzelnen Profile vom an sich ebenen Boden des Frachtraums frei und ungeschützt nach oben ragen, so daß sich eine quasi mit "Hindernissen" versehene Bodenfläche ergibt, bei der stets die Gefahr der Beschädigung der einzelnen Rollenbahnen besteht.

Ganz ähnliche Probleme ergeben sich bei Antriebsrolleneinheiten, die an verschiedenen Stellen in die Rollenbahnen zum Antrieb der darauf geförderten Frachtbehälter eingesetzt werden.

Die der Erfindung zugrundeliegende Aufgabe besteht darin, eine Rollenförderbahn der eingangs genannten Gattung zu schaffen, die eine im wesentlichen ebene Oberfläche besitzt, über welche nur die Rollen geringfügig hinausragen.

Erfindungsgemäß wird diese Aufgabe dadurch gelöst, daß die tragende Struktur aus einem Paneel besteht, das aus einem plattenförmigen Material gebildet ist und horizontale obere Deckplatten umfaßt, und in das der wenigstens eine nach oben zur Ebene der Deckplatten offene Kanal von den Deckplatten ausgehend nach unten ragend eingeformt ist, daß sich die Halterungsausschnitte im oberen Bereich der Seitenwände des Kanals über die Verbindungskante zur angrenzenden Deckplatte in diese hinein erstrecken und daß die Halterungen aus elastisch verformbarem Material als Schnapphalterungen ausgebildet und von oben her in die Halterungsausschnitte einschnappend einsetzbar gestaltet sind.

Bei dieser erfindungsgemäßen Ausgestaltung ist es also möglich, eine Rolle mit auf ihre Achsstummel aufgesetzten Schnapphalterungen von oben her in den Kanal des Paneels einzusetzen und dort zu verankern, ohne daß es erforderlich wäre, die Außenseite der Seitenwände der Kanäle zur Montage zugänglich zu halten. Die Paneele können daher mit durchgehenden Deckplatten ausgestattet sein, so daß sich insgesamt ein im wesentlichen ebener Frachtraumboden ergibt, über dessen obere Oberfläche nur die Rollen geringfügig vorragen. Dadurch wird nicht nur die Verschmutzungs- und Beschädigungsgefahr im rauhen Frachtladebetrieb entscheidend vermindert, sondern es ergibt sich auch insgesamt ein konstruktiv sehr einfacher Aufbau mit wenigen Teilen, die zudem kostengünstig gefertigt werden können und ein geringes Gewicht besitzen.

Zwar sind aus der EP-A-214 669 oder aus der FR-A-2 573 372 Rollenförderbahnen bekannt, bei denen die zwischen den einzelnen Rollenkanälen liegenden Bereiche durch horizontale obere Deckplatten abgedeckt sind.

Diese Deckplatten sind aber nicht in Form von Paneelen ausgebildet, in die der die Rollen aufnehmende Kanal von den Deckplatten ausgehend nach unten eingeformt ist. Vielmehr liegen diese Deckplatten auf Profilelementen auf, zwischen sich Kanäle frei lassen, in denen von den Wänden dieser Kanäle völlig unabhängige Tragstrukturen für die Rollen angeordnet sind. In beiden Fällen sind diese Tragstrukturen so ausgebildet, daß sie zusammen mit den Rollen in vertikaler Richtung zwischen zwei Lagen hin- und herbewegt werden können. In der einen dieser beiden Positionen befinden sich die Rollen in einer Ruhestellung, in der sie völlig unter die obere Oberfläche der Deckplatten abgesenkt sind. In der anderen Position sind sie demgegenüber so weit angehoben, daß sie geringfügig über die obere Oberfläche der Deckplatten vorstehen und somit zum Weitertransport von auf ihnen aufliegenden Gegenständen dienen können.

Somit weisen diese bekannten Anordnungen einen außerordentlich komplizierten Aufbau auf, der wegen der Vielzahl seiner Teile und des vergleichsweise hohen Gewichts nicht geeignet ist, zur Lösung der der Erfindung zugrundeliegenden Aufgabe beizutragen. Insbesondere geben diese beiden Druckschriften keinerlei Hinweise darauf, daß diese Aufgabe mit Hilfe einer Paneelstruktur gelöst werden kann, in die von den Deckplatten ausgehend nach unten ragende und nach oben offene Kanäle eingearbeitet und die in den Seitenwänden der Kanäle vorgesehenen Halterungsausschnitte sowie die in diese Ausschnitte einzusetzenden Halterungen gemäß der Erfindung ausgebildet sind.

Bevorzugt ist vorgesehen, daß jede Schnapphalterung eine im eingesetzten Zustand den unteren Rand des Halteausschnitts beiderseits umgreifende untere Ausnehmung aufweist, sowie eine obere Ausnehmung mit einer horizontalen Verriegelungsschulter, welche beim Einsetzen verriegelnd unter den hinteren Rand des Halterungsausschnitts in einer Deckplatte schnappt. Durch diese Ausgestaltung ist sichergestellt, daß die Schnapphalterung den darin eingesetzten Achsstummel der zugeordneten Rolle nicht nur in vertikaler Richtung sondern auch in beiden Axialrichtungen der Rolle und in der Richtung quer dazu im Kanal des Paneels fixiert.

Bevorzugt ist es, daß die Deckplatten und der Kanal des Paneels einstückig miteinander geformt sind und daß die horizontalen Deckplatten eine im wesentlichen ebene Fläche bilden.

Bei einer derartigen Gestaltung ist es besonders vorteilhaft, wenn das Paneel aus einem Verbundwerkstoff, wie faserverstärktem Kunststoff geformt ist. Es ergeben sich dadurch nicht nur geringe Herstellungskosten sondern auch ein gerade im Luftfrachtverkehr angestrebtes geringes Gewicht.

In der erfindungsgemäßen Rollenförderbahn sind auch an verschiedenen Halterungsplätzen der Kanäle elektromotorisch angetriebene Rollen zum Antreiben der Frachtobjekte vorgesehen. Derartige angetriebene Rollen können in gleicher Weise wie die freilaufenden Tragrollen mittels Schnapphalterungen in die Halterungsausschnitte eingesetzt werden. Damit dies ohne Zugänglichkeit der äußeren Seitenwände der Kanäle möglich ist, kann vorgesehen sein, daß zur Stromversorgung der angetriebenen Rollen in wenigstens eine Seitenwand des Kanals Leitbahnschienen isoliert eingebettet sind, die im Bereich unter den Halterungsausschnitten dem Inneren des Kanals zugewandt als Kontaktabschnitte freigelegt sind, und daß diese Kontaktabschnitte mit federnden Kontakten einer angetriebenen Rolle zusammenwirken. Durch diese Ausgestaltung ist es möglich, entsprechend den individuellen Bedürfnissen die angetriebenen Rollen an beliebigen Halterungsplätzen einzusetzen, wobei es lediglich notwendig ist, die Achsstummel der angetriebenen Rolle in die Schnapphalterung einzusetzen und diese Anordnung sodann in die Halterungsausschnitte einzuschnappen, wobei gleichzeitig eine leitende Verbindung zwischen den federnden Kontakten der angetriebenen Rolle mit den Leitbahnschienen zur Stromversorgung hergestellt wird.

Eine vorteilhafte Ausgestaltung sieht vor, daß jede Schnapphalterung ein im eingesetzten Zustand von oben her zugängliches Loch zum Einsetzen eines Werkzeugs aufweist, mit dem durch elastische Verformung des Körpers der Schnapphalterung der verriegelnde Eingriff der Verriegelungsschulter unter dem hinteren Rand des Halterungsausschnittes lösbar ist, so daß die Rolle jederzeit nach oben aus dem Kanal herausnehmbar ist.

Die Erfindung wird im folgenden beispielsweise unter Bezugnahme auf die Zeichnung näher erläutert; es zeigt:
- Fig. 1: eine schematische perspektivische Teilansicht eines Ausführungsbeispiels der Rollenförderbahn;
- Fig. 2: einen schräg von links unten in der Fig. 1 gesehenen Teilschnitt auf die Seitenwand eines Kanals der Rollenförderbahn entlang der Linie III-III in der Fig. 1;
- Fig. 3: eine perspektivische Ansicht einer Schnapphalterung in vergrößertem Maßstab;
- Fig. 4: einen Teilschnitt entlang der Linie II-II in der Fig. 1 mit Darstellung einer Rolle im eingeschnappten Zustand einer Schnapphalterung;
- Fig. 5: eine der Fig. 4 ähnliche Darstellung, wobei gezeigt ist, wie durch Einsetzen eines Werkzeugs und elastische Verformung des Körpers der Schnapphalterung deren Verriegelungsschulter unter dem hinteren Rand des Halterungsausschnitts zum Herausziehen nach oben gelöst werden kann;
- Fig. 6: eine Teilschnittdarstellung durch die Seitenwand eines Kanals entlang der Linie III-III in der Fig. 2.

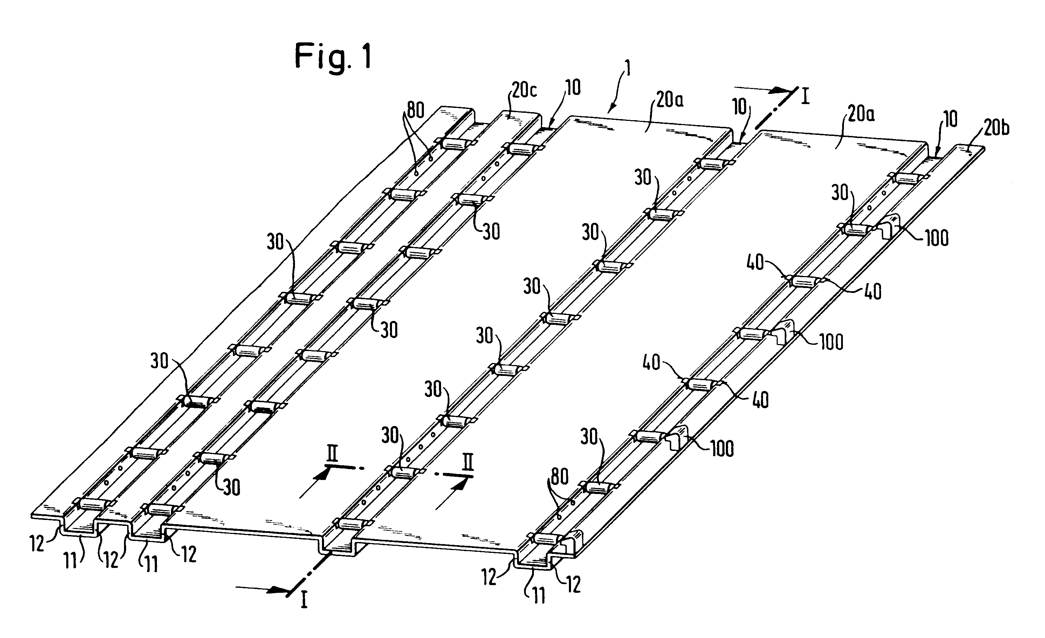

Die Fig. 1 zeigt etwas vereinfacht perspektivisch einen Teil einer Ausführungsform der Rollenförderbahn. Die tragende Struktur, mit der die Rollenförderbahn auf dem Boden des Frachtraums eines Flugzeugs befestigt ist, besteht aus einem Paneel 1, welches horizontal in einer Ebene liegende Deckplatten 20a, 20b, 20c umfaßt, zwischen denen jeweils nach unten ragend und sich nach oben öffnend U-förmige Kanäle 10 mit etwa vertikalen Seitenwänden 12 und einer die Seitenwände 12 unten verbindenden Bodenwand geformt sind. Beim praktischen Einsatz liegen die Bodenwände 11 der Kanäle 10 auf dem Boden des Frachtraums auf und sind an diesem festgelegt.

Das ganze Paneel 1 mit Deckplatten 20a, 20b, 20c und den nach Anzahl und Abstand zueinander den praktischen Bedürfnissen angepaßten Kanälen 10 ist einstückig aus einem plattenförmigen Material geformt, wie beispielsweise einem Verbundwerkstoff aus faserverstärktem Kunststoff.

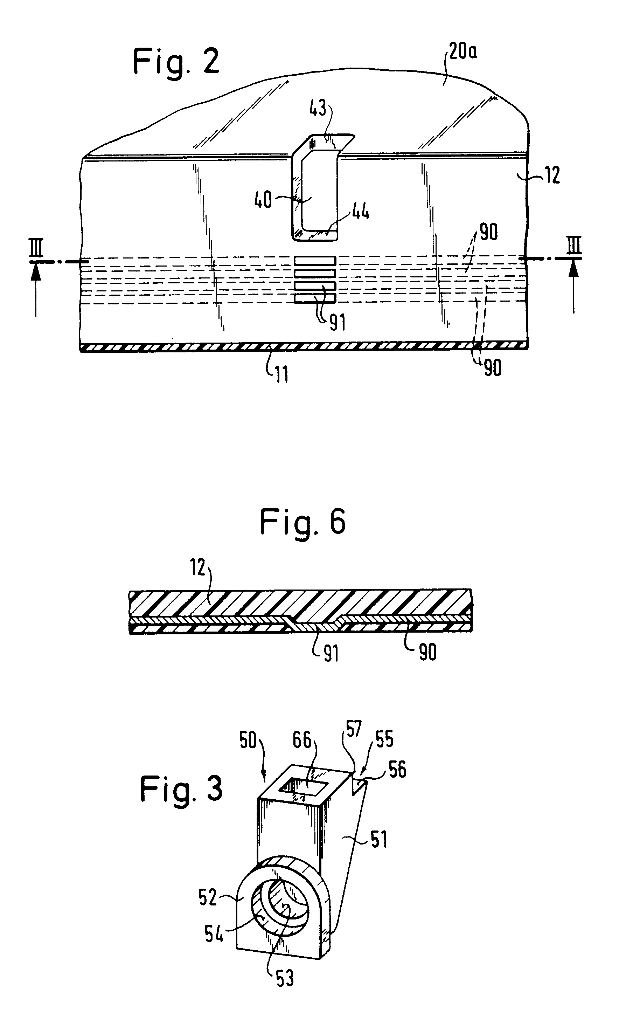

Entlang der Kanäle 10 sind jeweils paarig gegenüberliegend und in Längsrichtung der Kanäle 10 im Abstand zueinander angeordnet Halterungsausschnitte 40 geformt, deren Gestalt am besten in der Fig. 2 zu sehen ist. Jeder Halterungsausschnitt besteht aus einer im oberen Bereich der Seitenwand 12 eines Kanals 10 beginnenden rechteckigen Öffnung mit einem unteren Rand 44, wobei diese Öffnung über die obere Längskante der Seitenwand 12 hinweg in die benachbarte Deckplatte 20a reicht und mit einem hinteren Rand 43 in dieser Deckplatte endet. Der Halterungsausschnitt 40 hat also die Gestalt einer etwa rechteckigen, durch das Material des Paneels völlig hindurchgehenden Öffnung, die sich über die Verbindungskante der Seitenwand zur benachbarten Deckplatte 20a hinweg erstreckt. Diese Halterungsausschnitte 40 dienen zur Aufnahme der nachstehend beschriebenen Schnapphalterungen 50, in denen die einzelnen Rollen 30 der Förderbahn gehaltert sind.

Ferner sind in den Seitenwänden 12 der Kanäle 10 an verschiedenen Stellen jeweils paarige Befestigungslöcher 80 vorgesehen, die zur Halterung von (nicht gezeigten) Klemmen dienen, mit welchen Frachtbehälter nach beendetem Transport am vorgesehenen Lagerplatz fixiert werden können.

Im Abstand zueinander entlang des rechts in der Fig. 1 gelegenen Seitenrandes des Paneels 1 sind überdies eine Anzahl von Führungsbacken 100 angebracht, welche zur Führung eines Frachtbehälters während der Förderung entlang der Förderbahn sowie zur seitlichen Lagefixierung des Frachtbehälters im Lagerzustand dienen. Diese Führungsbacken 100 sind in Gestalt eines auf dem Kopf stehenden L ausgebildet, wobei der freie Schenkel des L dazu bestimmt ist, über einen an den Seitenrändern des Bodens der Frachtbehälter ragenden Längsflansch zu greifen.

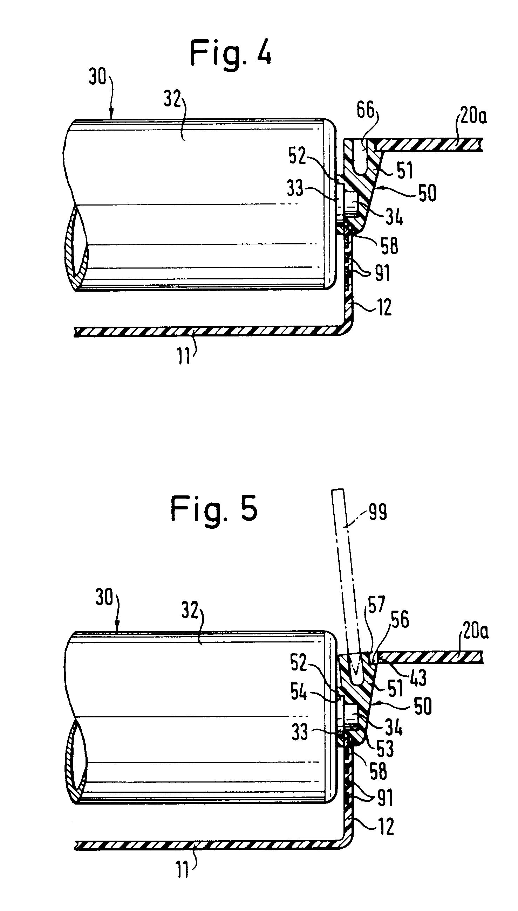

Die einzelnen Rollen sind beispielsweise als freilaufende Tragrollen in herkömmlicher Weise aufgebaut. Sie bestehen aus einem gewöhnlich hohlzylindrischen Rollenkörper 32 (siehe Fig. 4), in dessen beiden radialen Stirnflächen zentrisch Wälzlager (nicht gezeigt) angebracht sind, deren innerer Laufring mit einem radial nach außen ragenden Lagerbund 33 versehen ist und auf einem ebenfalls radial nach außen ragenden Achsstummel 34 sitzt. Durch diese Anordnung des Wälzlagers ist der Rollenkörper 32 gegenüber dem Achsstummel 34 frei drehbar, wobei der Lagerbund 33 dafür sorgt, daß der Rollenkörper 32 im Abstand zur benachbarten lagernden Struktur, in diesem Fall der Seitenwand 12 eines Kanals 10 gehalten wird.

Statt einer derartigen freilaufenden Tragrolle kann an den einzelnen Plätzen, wie im Einzelfall erforderlich, auch jeweils eine durch einen Elektromotor angetriebene Antriebsrolleneinheit vorgesehen sein, die äußerlich in den Abmessungen einer freilaufenden Tragrolle gleicht, die jedoch einen Mechanismus zum Antrieb enthält und zur Förderung der Frachtbehälter auf der Rollenbahn dient. Derartige Antriebsrolleneinheiten sind in der gleichzeitig eingereichten Patentanmeldung der gleichen Anmelderin mit dem Titel "Antriebsrolleneinheit" ausführlich erläutert; es wird daher auf diese Patentanmeldung vollinhaltlich verwiesen.

Wie bereits erwähnt, werden die einzelnen Rollen 30 mittels Schnapphalterungen 50 in den Halterungsausschnitten 40 des Paneels 1 gehaltert.

Wie in den Fig. 3 bis 5 dargestellt, besitzt eine derartige Schnapphalterung 50 einen im vertikalen Querschnitt durch die zugeordnete Drehachse einer Rolle 30 einen etwa keilförmigen, sich nach unten verjüngenden Körper 51, der im unteren Teil der der Rolle 30 zugewandten Vertikalseite einen etwa ringförmigen Ansatz 52 besitzt. Im Bereich dieses Ansatzes 52 ist in dem ringförmigen Ansatz 52 eine Bohrung 54 großen Durchmessers geformt, an die sich in den Körper 51 hinein zentrisch eine Bohrung kleineren Durchmessers 53 anschließt, die bei der dargestellten Ausführungsform blind endet. Die größere Bohrung ist nach Tiefe und Durchmesser etwa dem Lagerbund 33 der Rolle angepaßt, während die kleinere Bohrung 53 nach Tiefe und Durchmesser etwa dem überstehenden freien Teil des Achsstummels 34 der Rolle 30 entspricht. Wie in den Fig. 4 und 5 zu sehen ist, besitzt jede Schnapphalterung 50 im unteren Teil unter den Bohrungen 53 und 54 eine quer zu diesen verlaufende untere Ausnehmung 58 mit rechteckigem Querschnitt, deren Gestalt dem unteren Rand 44 des Halterungsausschnittes 40 angepaßt ist, so daß sie diesen unteren Rand 44 im eingesetzten Zustand umgreifen kann. In der oberen, dem ringförmigen Ansatz 52 abgewandten Kante des keilförmigen Körpers 51 ist eine obere Ausnehmung 55 geformt, die durch die vertikale Fläche 57 (Fig. 5) und die als horizontale Fläche 56 ausgebildete Verriegelungsschulter begrenzt ist.

Die gesamte Schnapphalterung ist einstückig geformt und besteht aus einem elastisch verformbaren Material, beispielsweise einem Kunststoff.

Zum Einsetzen und zur Halterung einer Rolle 30 in einem Kanal des Paneels 1 wird zunächst auf jeden der beiden Achsstummel 34 der Rolle 30 eine Schnapphalterung 50 derart aufgesetzt, daß der Achsstummel 34 in der kleinen Bohrung 53 sitzt, während der Lagerbund 33 in der großen Bohrung 54 aufgenommen ist. Sodann wird die Rolle 30 mit den beiden Schnapphalterungen 50 derart von oben in den Kanal 10 eingeführt, daß die beiden Schnapphalterungen 50 mit ihrem verjüngten Ende nach unten in die beiden einander gegenüberliegenden Halterungsausschnitte 40 im Kanal 10 eintreten. Durch Ausübung einer vertikalen Kraft nach unten gleiten die äußeren Schrägflächen des keilförmigen Körpers 51 der Schnapphalterungen 50 am hinteren Rand 43 jedes Halterungsausschnitts 40 entlang, wobei der keilförmige Körper 51 im oberen Bereich zur Rolle hin elastisch gebogen wird, wie beispielsweise in der Fig. 5 dargestellt. Schließlich führt diese Einsetzbewegung dazu, daß die untere Ausnehmung 58 den unteren Rand 44 des Halterungsausschnittes 40 umgreift und die Verriegelungsschulter 56 der oberen Ausnehmung 55 unter die Unterseite des hinteren Randes 43 des Halterungsausschnittes 40 tritt, so daß sie durch die Elastizitätskraft des verformten Körpers 51 unter diesen hinteren Rand 43 einschnappt. In dieser Stellung ist die Schnapphalterung 50 und damit auch die in sie eingesetzte Rolle 30 durch die untere Ausnehmung 58 in radialer Richtung der Rollenachse festgelegt, ferner in vertikaler Richtung nach oben durch die Verriegelungsschulter 56 und schließlich in Richtung der Kanäle 10 auch noch durch die vertikalen Seitenwände des Halterungsausschnitts 40, die mit geringem Spiel den entsprechenden Seitenflächen der Schnapphalterung 50 anliegen.

Zum Lösen der Schnapphalterung 50 und zum Herausnehmen der Rolle 30 aus dem Kanal 10 ist in der Schnapphalterung 50 ein in ihrer oberen horizontalen Fläche im eingesetzten Zustand freiliegendes blindes Loch 66 geformt. Wie in der Fig. 5 gezeigt ist, ist dieses Loch 66 zur Aufnahme eines geeigneten Werkzeugs 99 bestimmt, mit dem der Körper 51 der Schnapphalterung 50 in seinem oberen Bereich derart zur Rolle hin elastisch verbogen werden kann, daß die Verriegelungsschulter 56 von der Unterseite des hinteren Randes 43 des Halterungsausschnittes 40 freikommt, so daß die Rolle 30 nach oben aus dem Kanal 10 mitsamt den beiden Schnapphalterungen 50 herausgezogen werden kann.

Auf diese Weise lassen sich einzelne Rollen beispielsweise zur Wartung oder bei Beschädigung leicht austauschen oder aber durch Antriebsrolleneinheiten ersetzen. Die erfindungsgemäße Rollenförderbahn läßt sich dadurch ohne großen Arbeitsaufwand jederzeit den vorliegenden Bedürfnissen anpassen.

Wie insbesondere in den Fig. 2 und 6 zu sehen ist, sind in die Seitenwand des Kanals 10 in Längsrichtung parallel zueinander verlaufende Leitbahnschienen 90 aus elektrisch leitendem Material isoliert eingebettet. Diese Leitbahnschienen 90 dienen zur Stromversorgung von angetriebenen Antriebsrolleneinheiten, wie sie im einzelnen in der bereits vorstehend erwähnten, gleichzeitig eingereichten Patentanmeldung der gleichen Anmelderin mit dem Titel "Antriebsrolleneinheit" beschrieben ist.

Diese Leitbahnschienen 90 verlaufen über ihre größte Länge hinweg im Inneren des Materials der Seitenwand 12, wie in der Fig. 6 gezeigt, sie sind also in diesem Bereich vollständig isolierend eingebettet. Nur im Bereich unter jedem Halterungsausschnitt 40 sind diese Leitbahnschienen 90 als Kontaktabschnitte 91 zum Inneren der Kanäle 10 hin herausgeführt, so daß ihre Oberfläche unisoliert freiliegt. An diese Kontaktabschnitte legen sich beim Einsetzen einer Antriebsrolleneinheit der vorstehend genannten Art deren federnd vorgespannte Kontaktkörper an, so daß beim Einsetzen der Antriebsrolleneinheit ohne weiteres eine elektrische Verbindung mit der Stromversorgung durch die Leitbahnschienen 90 hergestellt wird. Auf diese Weise lassen sich bei der erfindungsgemäßen Rollenförderbahn freilaufende Tragrollen und Antriebsrolleneinheiten an beliebigen Stellen einsetzen, ohne daß es elektrischer Anschlußarbeiten bedarf.

## Patentansprüche

1. Rollenförderbahn mit einer Vielzahl von in Förderrichtung aufeinanderfolgend im Abstand zueinander und mit ihren Drehachsen quer zur Förderrichtung angeordneten freilaufenden und/oder elektromotorisch angetriebenen Rollen, wobei zumindest die freilaufenden Rollen dadurch in vertikalen, sich im Abstand parallel zueinander in Förderrichtung erstreckenden Seitenwänden wenigstens eines oben offenen Kanals einer tragenden Struktur drehbar und lösbar gehaltert sind, daß sie mit an ihren beiden Stirnflächen axial wegragenden Achsstummeln in passenden horizontalen Bohrungen von Halterungen aus elastisch verformbarem Material gelagert und diese Halterungen von oben her in Halterungsausschnitte eingesetzt sind, die ausgehend vom oberen Bereich der Seitenwände des wenigstens einen Kanals in diesen Seitenwänden ausgebildet sind, dadurch **gekennzeichnet,** daß die tragende Struktur aus einem Paneel (1) besteht, das aus einem plattenförmigen Material gebildet ist und horizontale obere Deckplatten (20a, 20b, 20c) umfaßt, und in das der wenigstens eine nach oben zur Ebene der Deckplatten (20a, 20b, 20c) offene Kanal (10) von den Deckplatten (20a, 20b, 20c) ausgehend nach unten ragend eingeformt ist, daß sich die Halterungsausschnitte (40) im oberen Bereich der Seitenwände (12) des Kanals (10) über die Verbindungskante zur angrenzenden Deckplatte (20a, 20b, 20c) in diese hinein erstrecken und daß die Halterungen aus elastisch verformbarem Material als Schnapphalterungen (50) ausgebildet und von oben her in die Halterungsausschnitte (40) einschnappend einsetzbar gestaltet sind.

2. Rollenförderbahn nach Anspruch 1, dadurch **gekennzeichnet,** daß jede Schnapphalterung (50) eine im eingesetzten Zustand den unteren Rand (44) des Halterungsausschnitts (40) beiderseits umgreifende untere Ausnehmung (58) aufweist, sowie eine obere Ausnehmung (55) mit einer horizontalen Verriegelungsschulter (56), welche beim Einsetzen verriegelnd unter den hinteren Rand (43) des Halterungsausschnitts (40) in einer Deckplatte (20a, b, c) schnappt.

3. Rollenförderbahn nach Anspruch 1 oder 2, dadurch **gekennzeichnet,** daß die Deckplatten (20a, b, c) und der Kanal (10) des Paneels (1) einstückig geformt sind.

4. Rollenförderbahn nach einem der vorhergehenden Ansprüche, dadurch **gekennzeichnet,** daß die horizontalen Deckplatten (20a, b, c) eine im wesentlichen ebene Fläche bilden.

5. Rollenförderbahn nach einem der vorhergehenden Ansprüche, dadurch **gekennzeichnet,** daß das Paneel (1) aus einem Verbundwerkstoff, wie faserverstärktem Kunststoff, geformt ist.

6. Rollenförderbahn nach einem der vorhergehenden Ansprüche, dadurch **gekennzeichnet,** daß zur Stromversorgung der angetriebenen Rollen in wenigstens eine Seitenwand (12) des Kanals (10) Leitbahnschienen (90) isoliert eingebettet sind, die im Bereich unter den Halterungsausschnitten (40) dem Inneren des Kanals (10) zugewandt als Kontaktabschnitte (91) freigelegt sind, und daß diese Kontaktabschnitte (91) mit federnden Kontakten einer angetriebenen Rolle zusammenwirken.

7. Rollenförderbahn nach einem der Ansprüche 2 bis 6, dadurch **gekennzeichnet,** daß jede Schnapphalterung (50) ein im eingesetzten Zustand von oben zugängliches Loch (66) zum Einsetzen eines Werkzeugs (99) aufweist, mit dem durch elastische Verformung des Körpers (51) der verriegelnde Eingriff der Verriegelungsschulter (56) unter dem hinteren Rand (43) des Halterungsausschnitts (40) lösbar ist.

## Claims

1. A roller conveyor track comprising a plurality of support rollers which are free-running and/or driven by an electric motor and which are arranged in succession at a spacing from each other in the direction of conveying movement with their respective axes of rotation disposed transversely with respect to said direction of conveying movement, at least said free-running rollers being thereby rotatably and detachably mounted in vertical side walls which extend at a spacing from and parallel to each other in the direction of conveying movement and form the side walls of at least one upwardly open channel of a supporting structure, that said free-running rollers are supported by means of shaft stubs projecting axially away from the two end faces of each of said support rollers and into fitting horizontally extending bores of mounting members of elastically deformable material, said mounting members being inserted from above into mounting openings which are formed in said side walls of said at least one channel so that they extend from the upper regions of said side walls, characterized in that said supporting structure comprises a panel means (1) which is formed from plate material and includes horizontal upper cover plates (20a, 20b, 20c) and said at least one channel (10) which is shaped to project downwardly from said cover plates (20a, 20b, 20c) and to be open to the plane of said cover plates (20a, 20b, 20c), in that said mounting openings (20) in the upper regions of said side walls (12) extend beyond the connecting edge at which the respective side wall (12) connects to the adjoining cover plate (20a, 20b, 20c) and into said cover plate, and in that said mounting members of elastically deformable material are formed as snap-fitting mounting members (50) which are adapted to be fitted by a snap fit downwardly into said mounting openings (40).

2. A roller conveyor track as set forth in claim 1, characterized in that each snap-fitting mounting member (50) has a lower recess (58) which in the fitted condition of the member embraces the lower edge (44) of the respective mounting opening (40) on both sides thereof, and an upper recess (55) having a horizontal locking shoulder (56) which in the operation of fitting same into position snaps lockingly under the rear edge (53) of said mounting opening (40) in one of said cover plates (20a, b, c).

3. A roller conveyor track as set forth in claim 1 or 2, characterized in that said cover plates (20a, b, c) and said channel (10) in said panel means (1) are formed in one piece.

4. A roller conveyor track as set forth in any preceding claim, characterized in that said horizontal cover plates (20a, b, c) form a substantially flat surface.

5. A roller conveyor track as set forth in any preceding claim, characterized in that said panel means (1) is formed from a composite material, for example from fiber reinforced plastic material.

6. A roller conveyor track as set forth in any preceding claim, characterized in that in order to provide for a supply of power to said driven rollers conductor track bar means (90) are embedded insulatedly in at least on side wall (12) of said channel (10), said bar means being exposed in the region under said mounting openings (40) towards the interior of said channel (10) to constitute contact portions (91), and in that said contact portions (91) co-operate with resilient contact means of said driven rollers.

7. A roller conveyor track as set forth in any of claims 2 to 6, characterized in that each of said snap-fitting mounting members (50) has an aperture (66) accessible from above in the fitted condition thereof, for the insertion of a tool (99) for releasing the locking engagement of said locking shoulder (56) from under said rear edge (43) of said mounting opening (40), by producing elastic deformation of the body (51).

## Revendications

1. Voie de transport à rouleaux comportant une multiplicité de rouleaux qui, dans la direction de transport, se succèdent à distance les uns des autres et dont ses axes de rotation sont transversaux à la direction de transport et qui tournent librement et/ou sont entraînés par des moteurs électriques, et dans laquelle au moins les rouleaux tournant librement sont maintenus de façon amovible et de manière à pouvoir tourner librement dans des parois latérales verticales, qui s'étendent parallèlement entre elles et à distance dans la direction de transport, d'au moins un canal, ouvert à sa partie supérieure, d'une structure de support, de telle sorte qu'ils sont supportés par des bouts d'axes, qui ressortent axialement à leurs deux surfaces frontales et sont logés dans des perçages horizontaux adaptés d'éléments de maintien réalisés en un matériau déformable élastiquement, ces éléments de maintien étant insérés depuis le haut dans des découpes de maintien qui sont formées dans les parois latérales d'au moins un canal, à partir de la partie supérieure de ces parois, caractérisée en ce que la structure de support est constituée par un panneau (1), qui est réalisé en un matériau en forme de plaque et comprend des plaques horizontales supérieures de recouvrement (20a, 20b, 20c), et dans lequel au moins un canal (10), qui s'ouvre à sa partie supérieure en direction du plan des plaques de recouvrement (20a, 20b, 20c), est ménagé de manière à faire saillie vers le bas à partir des plaques de revêtement (20a, 20b, 20c), que les découpes de maintien (40) sont ménagées dans la partie supérieure des parois latérales (12) du canal (10) et s'étendent dans la plaque de recouvrement contiguë (20a, 20b, 20c), au-delà du bord de liaison avec cette plaque, et que les éléments de maintien sont réalisés en un matériau déformable élastiquement, sous la forme d'éléments de maintien à encliquetage (50) et sont conformés de manière à pouvoir être insérés depuis le haut, en s'y encliquetant, dans les découpes de maintien (40).

2. Voie de transport à rouleaux selon la revendication 1, caractérisée en ce que chaque élément de maintien à encliquetage (50) présente un évidement inférieur (58) qui, lorsque l'élément de maintien à encliquetage est à l'état inséré, entoure des deux côtés le bord inférieur (44) de la découpe de maintien (40), ainsi qu'un évidement supérieur (55) comportant un épaulement horizontal de verrouillage (58) qui, lors de son insertion, s'encliquette en se verrouillant audessous du bord arrière (43) de la découpe de retenue (40) dans une plaque de recouvrement (20a, b, c).

3. Voie de transport à rouleaux selon la revendication 1 ou 2, caractérisée en ce que les plaques de recouvrement (20a, b, c) et le canal (6) du panneau (1) sont réalisées d'un seul tenant.

4. Voie de transport à rouleaux selon l'une des revendications précédentes, caractérisée en ce que les plaques de recouvrement horizontales (20a, b, c) forment une surface sensiblement plane.

5. Voie de transport à rouleaux selon l'une des revendications précédentes, caractérisée en ce que le panneau (1) est réalisé en un matériau composite, comme par exemple une matière synthétique renforcée par des fibres.

6. Voie de transport à rouleaux selon l'une des revendications précédentes, caractérisée en ce que pour l'alimentation en courant des rouleaux entraînés, dans au moins une paroi latérale (12) du canal (10) sont enchâssés, en étant isolés, des rails conducteurs (90), qui sont à nu sous la forme de sections de contact (91), tournées vers l'intérieur du canal (10), dans la zone située au-dessous des découpes de maintien (40) et que ces sections de contact (91) coopèrent avec des contacts élastiques d'un rouleau entraîné.

7. Voie de transport à rouleaux selon l'une des revendications 2 à 6, caractérisée en ce que chaque élément de maintien à encliquetage (50) présente un trou (66) accessible à partir du haut, lorsque l'élément de maintien à encliquetage est à l'état inséré, pour l'insertion d'un outil (99), à l'aide duquel on peut libérer, par déformation élastique du corps (51), la venue en prise à verrouillage de l'épaulement de verrouillage (56) au-dessous du bord arrière (43) de la découpe de maintien (40).
